# EUROPEAN PATENT SPECIFICATION

(11) **EP 1 514 065 B1**
(45) Date of publication and mention of the grant of the patent: **25.04.2007**
(21) Application number: 03740740.0
(22) Date of filing: 12.06.2003
(51) Int. Cl.: F27D 23/04, F27B 3/04, B01F 13/08, H05B 6/34, C22B 7/00

(54) **ELECTROMAGNETIC INDUCTION APPARATUS AND METHOD OF TREATMENT OF MOLTEN MATERIALS**
ELEKTROMAGNETISCHES INDUKTIONSGERÄT UND VERFAHREN ZUR BEHANDLUNG GESCHMOLZENER WERKSTOFFE
DISPOSITIF A INDUCTION ELECTROMAGNETIQUE ET PROCEDE POUR TRAITER DES MATERIAUX EN FUSION

(30) Priority: 15.06.2002 GB 0213848; 28.03.2003 GB 0307150
(43) Date of publication of application: 16.03.2005
(73) Proprietor: Solios Thermal Limited, Wolverhampton WV5 8BY (GB)
(72) Inventor: HOUGHTON, Barry, Solios Thermal Limited, Wolverhampton WV5 8BY (GB)
(74) Representative: Parker, Nigel Edward
(86) International application number: PCT/GB2003/002589
(87) International publication number: WO 2003/106908

(56) References cited:
- US-A- 2 528 209
- US-A- 3 709 476
- US-A- 4 397 687
- US-A- 4 589 637
- US-A- 5 462 572
- US-A- 6 136 264
- PATENT ABSTRACTS OF JAPAN vol. 009, no. 168 (M-396), 13 July 1985 (1985-07-13) -& JP 60 040654 A (MITSUBISHI JUKOGYO KK), 4 March 1985 (1985-03-04)

## Description

This invention relates to improvements in or relating to the treatment of molten materials and is more particularly concerned with improved melting/stirring and/or improved movement or transfer of molten metal materials.

The recycling of scrap metal is increasing, and therefore considerable efforts are being made to improve the efficiency of recycling processes, part of which includes the melting of scrap metal.

It is known to provide furnaces for the melting and refining of metal materials such as aluminium or other materials. Often such furnaces are utilised to recycle scrap metal. Various proposals have been made to improve the melting and refining process, for example, by stirring the molten metal (and alloy additives where provided) and stirring a mix of molten metal and additional solid-state metal materials introduced into the melt in the furnace. Stirring the molten metal helps the efficiency of the melting process distributing the heat throughout the melt and also helps in melting solid-state scrap material and/or additives, introduced into the melt, more quickly.

In this connection, it is known to provide a stirring apparatus in the form of an electromagnetic induction unit (in the form of a linear motor) that can be positioned underneath the furnace in a horizontal plane adjacent a bottom wall of the furnace underneath the melt in the use. The magnetic field created by the induction motor acts through a relatively thick plate on the bottom of the furnace and effectively stirs the molten material slowly in a horizontal plane in an attempt to disperse the heat evenly throughout the melt. It is also known to employ mechanical stirrers in such furnaces to create a similar stirring action. However, it is believed that such a treatment of molten metal tends to have disadvantages at least in certain applications. For example, when additional scrap metal material or alloy additives such as silicon are introduced into the furnace on top of the melt, the stirring action provided by the electromagnetic induction motor does not contribute greatly to mixing the new scrap metal material /additives evenly throughout the melt. Often the scrap metal material/additive will be quite light (particularly a silicon additive) and will simply float on the surface of the melt as it is stirred around in a horizontal plane rather than, for example, being dragged downwardly into the molten metal where it can be melted much more quickly and effectively. Once again, scrap metal in the form of aluminium drink cans will simply float on the top of the melt and become oxidised rather than being submerged within the bath to be melted down and recycled in an efficient manner.

Additionally, such induction motor stirring apparatus tends to be slow, for example, operating at 1Hz. The design constraints for such motors require quite a deep magnetic field to be propagated throughout the full height of the molten material in the furnace so that the horizontal circulatory stirring action takes place throughout the whole of the molten material rather than, for example, in the lower layer of material. Thus, in order to achieve such a depth of magnetic field, a high speed of stirring has to be sacrificed. A much lower speed of stirring is achievable than would otherwise be the case if the material could be stirred using a reduced depth of magnetic field.

Where mechanical stirrers are provided, these tend to burn out quite quickly and need to be replaced and once again do not appear to have been arranged to act in a manner conducive to submerging scrap metals/additives introduced on top of the melt.

Once again, it is believed that there tend to be problems in the extraction of the molten metal material once it has undergone treatment in the furnace. The usual manner of extracting the molten metal materials tends to be somewhat dangerous for the operator. A plug may be provided at the bottom of the furnace that can be removed to allow the molten metal materials to flow there through and thus be extracted from the furnace, or, in other arrangements, the furnace has to be tilted in order to pour the molten contents from the furnace. In either case, it is believed that the level of involvement for the operator carries a risk of being harmed by the molten metal materials in a manner which need not necessarily be the case if the method of extraction of molten materials from the furnace were improved.

It is an object of the present invention to at least alleviate one or more of the aforementioned, or other, disadvantages associated with the treatment of molten materials and/or to provide an improved stirring apparatus, system, stirring arrangement, movement or transfer apparatus, furnace or method.

According to a first aspect of the present invention there is provided flow inducement or stirring apparatus adapted for use in recycling or refining scrap materials comprising or including electromagnetic induction apparatus adapted for inducing downward and/or upward flow of molten metal material and/or circulation of molten metal material in a vertical plane and in which the electromagnetic induction apparatus is arranged, in use, at an angle inclined to the horizontal in order to create an upward and/or downward inclined driving force on the molten metal to drag any materials introduced on top of the molten metal downwardly to be submerged and said flow inducement or stirring apparatus being adapted, in use, to simultaneously create a horizontal flow of molten metal material out of the vertical plane and/or circulation of molten metal in a horizontal plane.

According to a second aspect of the present invention there is provided flow inducement or stirring apparatus comprising or including selectively bi-directional electromagnetic induction apparatus adapted for inducing downward and/or upward flow of molten metal material in a container and/or circulation of molten metal material in a vertical plane, for example in a furnace, and in which the electromagnetic induction apparatus is arranged, in use, at an angle inclined to the horizontal in order to create an upward and/or downward inclined driving force on the molten metal and said flow inducement or stirring apparatus being adapted, in use, to simultaneously create a horizontal flow of molten metal material out of the vertical plane and/or circulation of molten metal in a horizontal plane, said electromagnetic induction apparatus being utilisable in one direction to create circulation in a vertical plane and submerge any materials on top of the molten metal and utilisable in a reverse direction to extract molten material from the container .

Further according to the present invention there is provided a furnace or chamber for treating molten metal materials in combination with at least one flow inducement or stirring apparatus as claimed in the immediately preceding paragraph.

The flow inducement or stirring apparatus may also be arranged, in use, to create a horizontal flow of molten metal material and/or circulation of molten metal in a horizontal plane e.g. between two or more chambers of a furnace such as a sidewell furnace.

Usually, the electromagnetic induction apparatus will be arranged, in use, at an angle inclined to the horizontal (typically 40° to 70°) in order to create an upward and/or downward driving force on the molten metal. The electromagnetic induction apparatus may be positioned on an inclined wall of a chamber of furnace, in use, containing molten metal. Where no such inclined wall is available, the induction apparatus may be positioned at angle on a vertical chamber/furnace wall by means of an attachment cradle or port of the flow inducement or stirring apparatus.

The cradle or port preferably includes an aperture which, in use, leads to molten metal material (e.g. in a furnace) and allows e.g. alloy additives such as silicon to be introduced into the molten metal material and allows samples of the metal to be taken as well as degassing.

In one embodiment of the invention, the flow inducement or stirring apparatus is arranged to provide a circulating flow in the melt, said circulation being in a vertical plane to enable solid scrap materials/ light additives introduced on top of the melt to be dragged downwardly and submerged under the influence of the molten metal flow created by the flow inducement or stirring apparatus. This creates a more efficient heat dispersal which reduces melt and process times, and also reduces exposure of the scrap metal to an oxidising atmosphere, thereby minimising metal loss by oxidation.

Preferably, the power or speed of the flow inducement or stirring apparatus will be variable to suit different tasks to be undertaken by the flow inducement/stirring apparatus. For example, if the flow inducement/stirring apparatus is utilised to drive the flow of molten metal in a downward direction e.g. to create a circulation in a vertical plane the speed may be set to a higher level than a scenario where the flow inducement/stirring apparatus is utilised to extract metal from a chamber or furnace. If the speed were to be set too high, on extraction of the metal from the chamber or furnace the material could spurt out dangerously.

Preferably, the speed of the flow inducement or stirring apparatus may be set to various values up to 50Hz (+/-10 Hz).

Preferably, the flow inducement/stirring apparatus is bi-directional to induce flow of molten metal selectively in two opposed directions according to the choice of the operator.

In one embodiment, where the flow inducement/stirring apparatus is bi-directional and utilised in one direction to create circulation in a vertical plane in order to submerge and mix light scrap materials/additives into the melt, said flow inducement/stirring means may be utilised in its other directional mode to reverse the flow circulation and thus extract molten materials from a chamber or furnace.

Further according to the present invention there is provided a method of recycling or refining scrap materials, said method comprising inducing an upward and/or downward flow of molten metal and/or circulation of molten metal in a vertical plane, by electromagnetic induction apparatus and comprising inducing a horizontal flow of molten metal material and/or circulation of molten metal in a horizontal plane and including introducing scrap materials into the molten metal and dragging the scrap material downwardly to be submerged by said upward and/or downward flow of molten metal and/or by circulation of molten metal in a vertical plane.

There may be provided electromagnetic induction means adapted or arranged to induce a fast flow in molten metal > 1Hz e.g. 50 HZ (+/- 15Hz).

Further advantageous features of the present invention will be evident from the following description and drawings.

Embodiments of the present invention will now be described, by way of example only, with reference to the much simplified accompanying drawings in which:
FIGURE 1 shows a perspective view of flow inducement or stirring apparatus for controlling the flow of molten metal materials attached to a wall that may for example be a furnace wall;
FIGURE 2 shows a vertical cross-section view of the flow inducement or stirring apparatus and chamber/furnace wall shown in FIGURE 1 taken on line II-II as shown in FIGURE 1;
FIGURE 3 shows a vertical, part sectional view through a furnace, molten metal material and flow inducement/stirring apparatus as shown in FIGURES 1 and 2;
FIGURE 4 shows a part sectional side view of a second embodiment of a furnace fitted with a second embodiment of flow inducement/stirring apparatus acting in one direction to cause circulation of molten metal material in a vertical plane;
FIGURE 5 shows a view similar to FIGURE 4 but with the flow inducement/stirring apparatus acting in the opposed direction to extract molten metal materials from the furnace;
FIGURES 6 and 7 show plan and side views of typical circulatory flow patterns set up by the flow inducement/stirring apparatus as depicted in FIGURE 4;
FIGURE 8 shows a sectional side view of a third embodiment of a furnace in accordance with the present invention;
FIGURE 9 shows schematically the flow of molten metal in the furnace of FIGURE 8;
FIGURE 10 shows a sectional plan view of a further embodiment of a furnace according to the present invention;
FIGURE 11 shows a sectional side view of a furnace shown in FIGURE 10 taken on line A-A, and
FIGURE 12 shows a sectional side view of a furnace taken on line B-B of FIGURE 10.

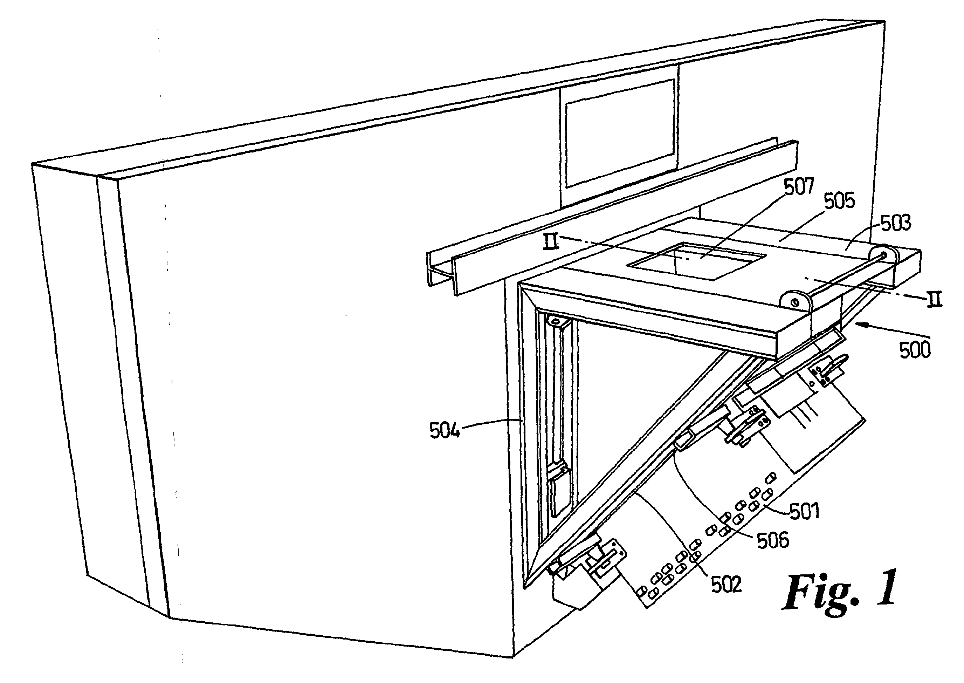

Referring to FIGURES 1-3 of the accompanying drawings, flow inducement or stirring apparatus 500 includes electromagnetic induction apparatus in the form of a generally rectangular box 501 connected to an inclined end wall 502 of a cradle or port 503 of the apparatus 500, being generally of right-angled isosceles triangle cross-section. The inclined wall 502 is angled at 45° to the vertical wall 504 and horizontal wall 505 of the cradle or support 503.

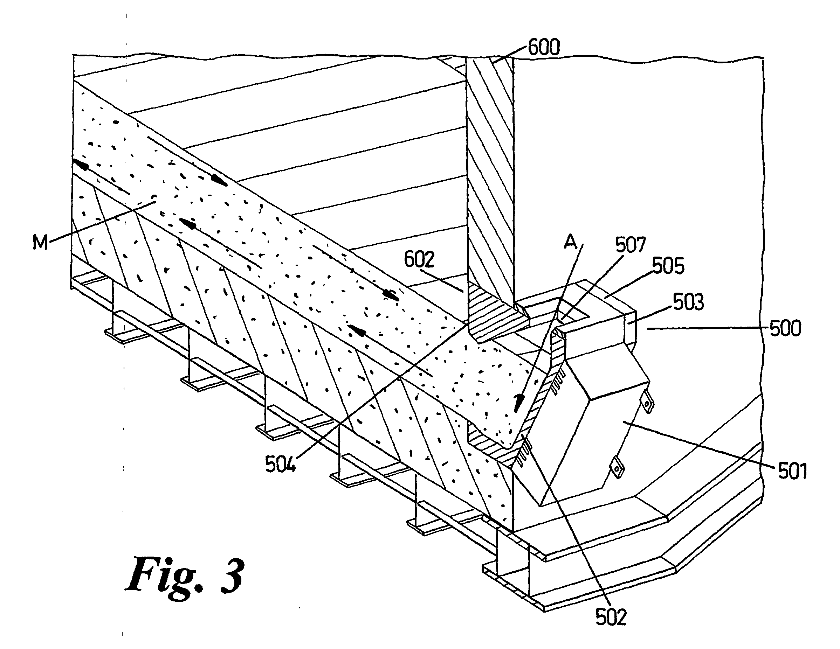

The manner in which the cradle or port 503 can be connected into the vertical end wall 600 of the furnace 601 should be evident from FIGURE 3 of the drawings. The port or cradle 503 can be fixed into the wall 600 of the furnace 601 by creating an aperture 602 of an appropriate size and by utilising usual refractory techniques to fix the port in the aperture.

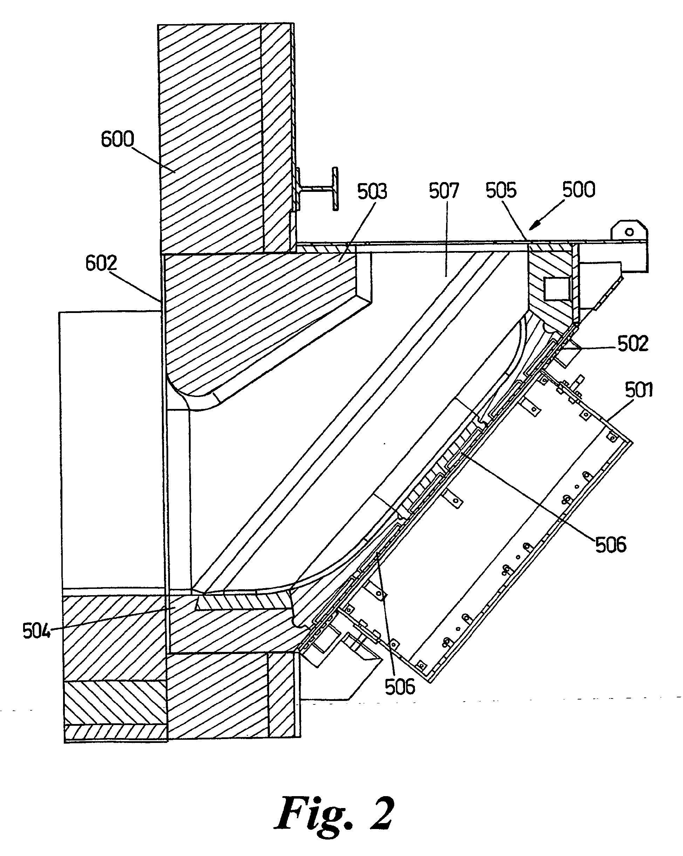

The electromagnetic induction apparatus 501 is connected to said end wall 502 by any appropriate means and acts through a thin metal carbide plate construction 506 (see FIGURE 2) the metal plate construction 506 is made up of separate tiles.

The port or cradle 503 has an upper rectangular aperture 507 which in use leads straight into the upper surface of molten metal material M at the bottom of furnace 601 and which extends into the port or cradle 503, close to the electromagnetic induction apparatus 501 but on an opposite side of the thin plate 506 as will be evident from

### FIGURE 3.

In use, as shown more particularly in FIGURE 3 of the drawings, the electromagnetic induction apparatus 501 (which is in effect a linear motor) can be operated to induce a circulatory flow pattern in the molten metal. This circulatory motion depicted by the arrows in FIGURE 3 is set up by the downwardly inclined magnetic driving force (represented by arrow A in FIGURE 3) created by the flow inducement/stirring apparatus 501. The magnetic driving force (arrow A) is a powerful force directed essential axially of the electromagnetic induction apparatus 501 and thus at an angle of generally 45° parallel with the end wall 502 of the cradle or port 503.

Whilst in the aforedescribed embodiment the end wall 502 is set an angle of 45° it is possible that an alternative angle (for example 30° or 60°) could be chosen to suit the particular application or use of the electromagnetic induction apparatus.

It is envisaged that the electromagnetic induction apparatus 501 will be a powerful motor of variable speed, for example, of up to 50Hz. Thus, during operation the electromagnetic induction apparatus 501 will be able to stir the molten metal material M at very fast flow rates in the vertical plane. The flow circulation set up in the molten material M is advantageous for several reasons. Firstly, any metal materials (for example, scrap metal and/or additives) introduced into the furnace on top of the molten material M will become almost immediately or at least very rapidly dragged down and submerged into the material however light they may be. Since such materials are rapidly submerged into the molten material M disadvantageous oxidation of same will be substantially prevented unlike in known furnaces where light materials can remain floating on the molten material.

Secondly, the circulatory flow induced in the molten material M is far more rapid than that of known stirring techniques which take place in a horizontal plane. Such stirring techniques typically stir the molten material M at about 1Hz. The induction apparatus 501 is able to stir the molten metal material at much higher speeds because it sets up a downward flow at one end of the molten metal material rather than having to act generally from below over the whole height of molten material requiring a very deep magnetic field to be created.

Additionally and advantageously, alloy additives such as silicon can be charged through the opening 507 through the port 503 into the molten metal material M and rapidly dissolved into solution. The port 503 can be used as a one point introduction of fluxes and good mixing throughout the molten material.

Additionally and advantageously, the aperture 507 in the port 503 can be used for taking samples of the molten material, thus avoiding the need to open the main door of the furnace to take samples.

Additionally, the flow inducement/stirring apparatus 500 can be used not only for circulating the molten metal material M in a vertical plane but also for degassing in the holding furnace 601. A gas lance (not shown) can be introduced into the molten metal flow through the opening 507 to give good dispersion in the molten metal M around the bottom of the furnace.

Since the electromagnetic field induced by the electromagnetic induction apparatus may be selectively variable, the circulation of the molten metal material or stirring in a vertical plane can be set up at a controlled rate to suit different materials and /or conditions. The molten metal material M may be stirred at a controlled rate of up to about 15T/minute. Advantageously, the provision of high stirring rates gives increased melt rate and much reduced temperature and reduced alloy stratification. Low running metal levels can be accommodated.

Whilst, as described, the electromagnetic induction apparatus 501 has been arranged to provide or induce a generally downward flow of molten metal material (as indicated by arrow A) to thereby bring about circulation of molten metal material in a vertical plane, it is envisaged that the apparatus 501 will be bi-directional. Thus, if required the apparatus 501 could be arranged to move the molten metal material generally upwardly in a reverse direction to arrow A. Such facility may be used for example to extract molten metal material M from the furnace, in a manner to be described.

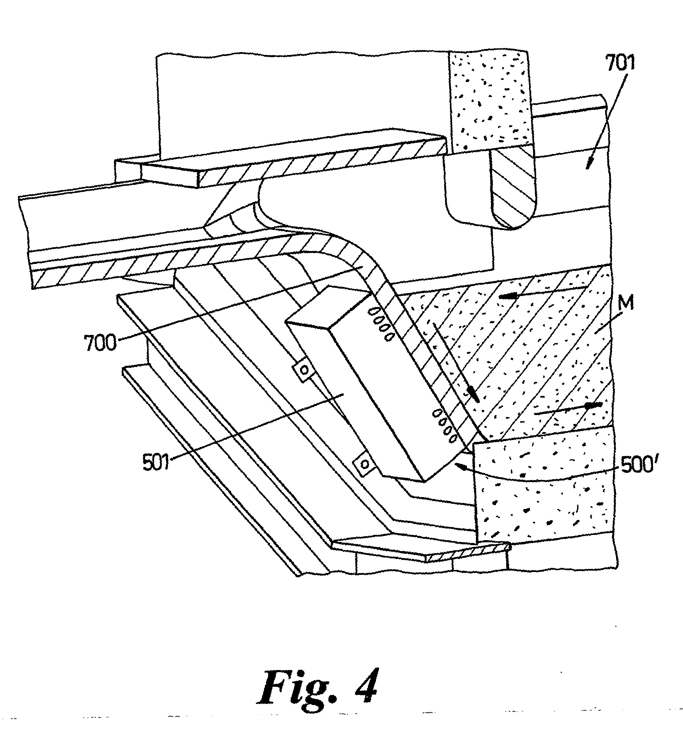

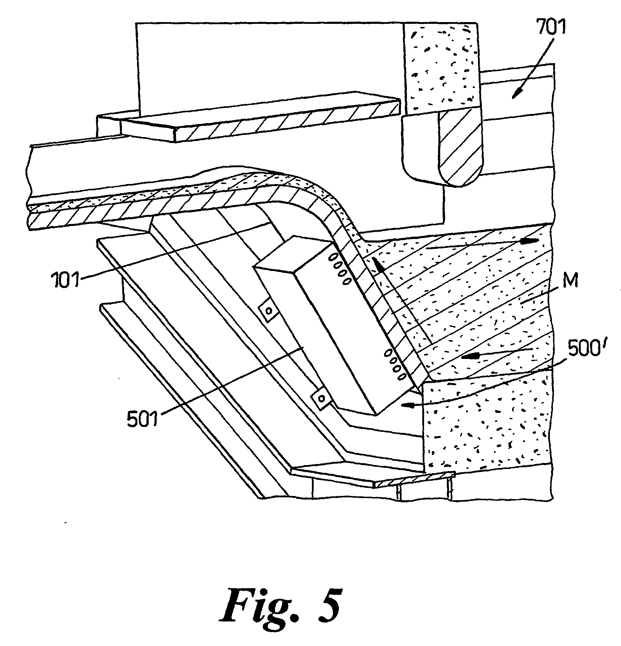

FIGURES 4 and 5 show a second embodiment of flow inducement or stirring apparatus 500' which consists of the electromagnetic induction apparatus 501 located on an existing or purpose made inclined wall 700 of a furnace 701. In this instance therefore, there is no cradle or port 503 adapted to connect the electromagnetic induction apparatus 501 to the furnace wall at an inclined angle to induce downward and/or upward flow or circulation in a vertical plane.

As shown in FIGURE 4, the electromagnetic induction means 501 can be set to move the molten metal material M in a downward direction to cause circulatory motion of the molten material M in a vertical plane during the melting process. When it is desired to extract the molten metal material from the furnace, the electromagnetic induction means 501 can be set to drive the molten metal material in a reverse direction upwardly as shown in FIGURE 5 to be transferred out of the furnace along the extraction chute 702, in a manner which should be evident from FIGURES 4 and 5. It is possible that the electromagnetic induction apparatus 501 and the extraction chute 702 are constructed together as a unit constituting flow inducement or stirring apparatus, said unit being adapted for connection to an existing vertical side wall of a furnace.

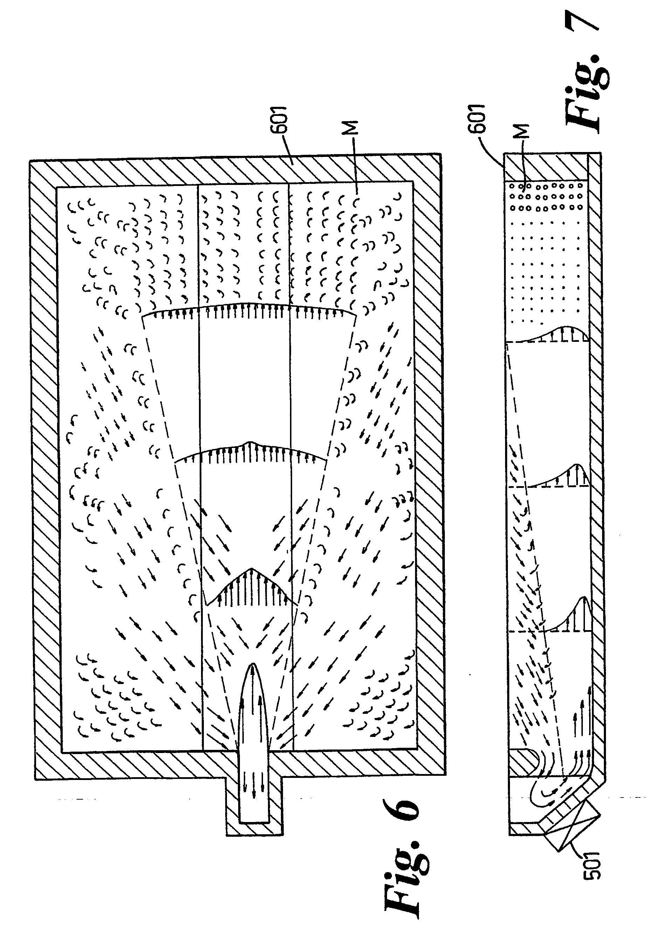

FIGURES 6 and 7 show the typical flow patterns that may be set up in the molten material M by the electromagnetic induction apparatus 501 operating as shown in

### FIGURE 4.

Of course, it is possible that a furnace is provided with more than one electromagnetic induction apparatus 501 for example, electromagnetic induction apparatus 501 and port 503 could be connected at one end of a furnace 601 more particularly as shown in FIGURE 3, in order to stir the molten material in the furnace and a second electromagnetic induction apparatus 501 could be provided at an opposite end of the furnace to extract the molten metal material along the chute 702, more particularly as shown in FIGURE 5. Moreover, where two such electromagnetic induction apparatus 501 are provided they could be arranged to operate in cooperation with one another.

Where the electromagnetic induction apparatus 501 is utilised to extract molten metal material from the melt M through extraction chute 702, it will normally be operated on a much lower speed so that the material does not spurt or gush forth uncontrollably from chute 702, which could obviously be hazardous for an operator.

Thus, it should be obvious, that the electromagnetic induction apparatus 501 may be set up to induce movement or flow of molten metal material in a vertical plane by arranging same at an angle to vertical. Where the chamber wall or furnace wall is vertical the flow inducement or stirring apparatus may require a port or cradle for attachment. Otherwise, if the chamber or furnace already has a suitably inclined wall or a purpose made inclined wall is provided, the electromagnetic induction apparatus may be attached thereto without the port or cradle.

Thus, the electromagnetic induction apparatus 501 can be retrofitted to most surfaces and can be used on round topped furnaces as well as being used on side well furnaces for circulation and metal submergence. It can also be fitted to static or tilting furnaces.

Another benefit is the flexibility that the system of transfer or moving molten metal by use of the electromagnetic induction apparatus in accordance with the present invention provides. Since the electromagnetic induction apparatus is powerful enough to pump uphill, a static melter is no longer needed on a raised level compared to the holder/furnace or casting device.

Advantageously, the flow inducement or stirring apparatus allows metal to be transferred from the furnace without tilting or tap out blocks and it can be used during tilting/casting at controlled flow rates, to maintain consistent alloy composition, which is especially important where the densities of alloying elements are different to the molten metal material (e.g.aluminium).

Overall, the flow inducement or stirring apparatus 500 should allow increased production, lower energy consumption and melt loss, molten metal transfer, rapid submergence of light/medium weight scrap in the molten metal material, alloy and temperature homogeneity during casting, and faster solution of alloys.

Advantageously, no moving parts are required, which should yield low maintenance in addition to which the inducement or stirring apparatus is suitable for installation on static or tilting furnaces.

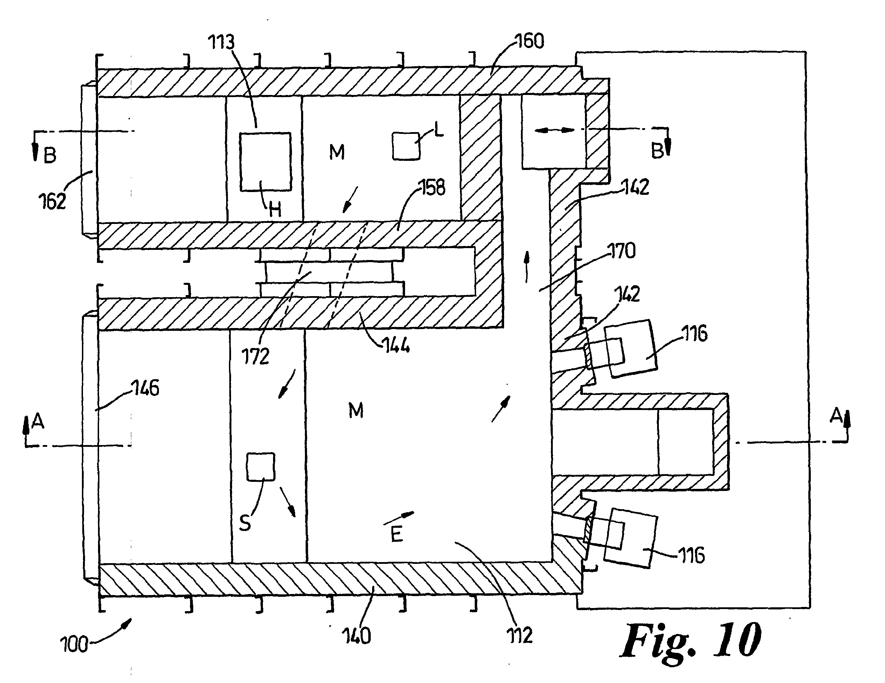

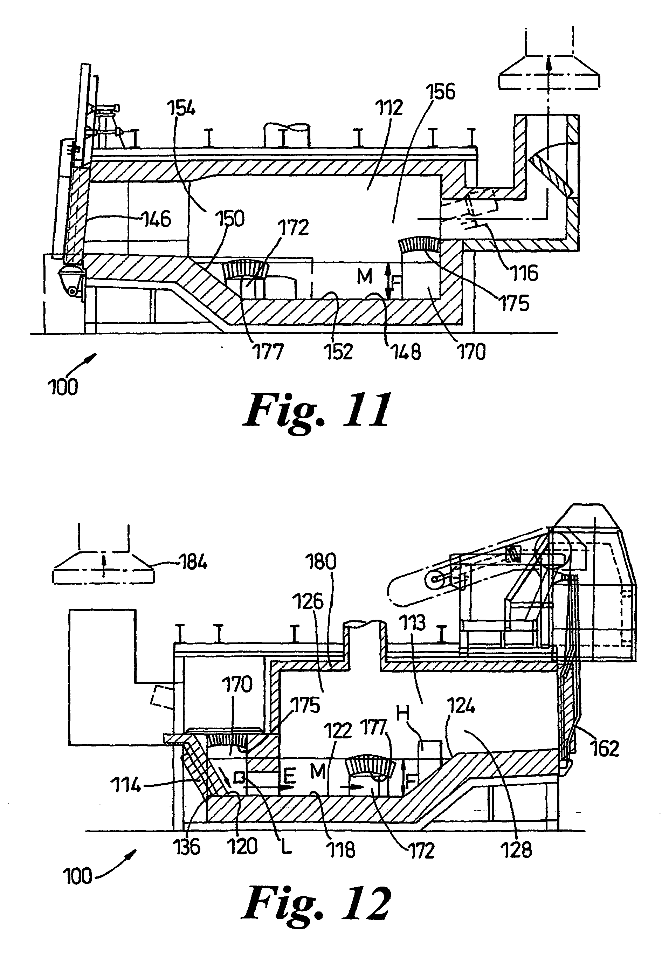

In particular, the flow inducement or stirring apparatus may be utilised in a side well furnace (see FIGURES 10-12). The furnace 100 includes a main chamber 112 and a side well chamber 113. Electromagnetic induction means 114 (see FIGURE 12) is utilised to move molten material in the vicinity of the induction means 114 downwardly thereby creating a circulatory movement in a vertical plane. However, the downward driving movement of the molten material also drives the molten material in a generally horizontal circulatory fashion via passageway 172 and return passageway 170.

Thus, the powerful driving action of the flow inducement stirring apparatus 114 is able to rapidly circulate the molten metal material between the main chamber 112 and the side chamber 113 due to the initial downward pulling force exerted on the molten material adjacent thereto. Further discussion of the present invention in relation to a side well furnace is described later on in this specification.

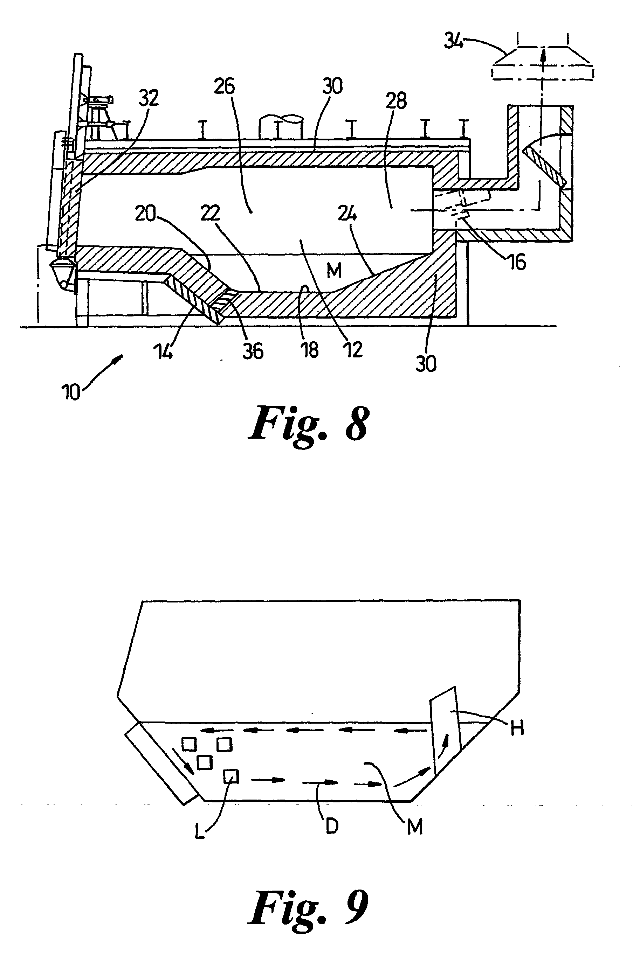

With reference to FIGURE 8, there is shown a single chamber furnace 10 generally of known form including a chamber 12 and a known heat source in the form of burner 16.

The chamber 12 has a floor 18 which includes a front inclined portion 20, a horizontal portion 22 and a rear inclined portion 24. The front inclined portion 20 and the horizontal portion 22 define a front region 26, and the rear inclined portion 24 defines a rear region 28 of the chamber 12. Electromagnetic induction means 14 is positioned in accordance with this embodiment of the present invention on inclined wall portion 20.

The chamber 12 is enclosed, i.e. surrounded by walls 30, with a liftable door 32 located in one of the walls 30. The liftable door 32 allows metal to be introduced into the chamber 12.

The furnace includes extraction means 34 for removing impurities from the chamber. As aforementioned, the furnace itself is generally of a type known per se and thus will not be described in further detail.

Supplying a current to the electromagnetic induction means 14 creates a molten metal flow.

Advantageously, since the electromagnetic induction means is inclined relative to the level position of the molten metal M, the molten metal flow has both horizontal and vertical components. This is best seen in FIGURE 9 where arrows D schematically show the flow.

With reference to FIGURES 10 to 12, there is shown an alternative embodiment in the form of a two chamber furnace 100.

Furnace 100 is also generally of a known form and includes a main chamber 112, a sidewell chamber 113 and a heat source in the form of twin burners 116, the burners being located so as to direct heat into the main chamber 112.

In accordance with this embodiment of present invention, the furnace 100 further includes electromagnetic induction means 114, positioned in an inclined manner as shown.

The electromagnetic induction means 114 is located in the sidewell chamber 113, and the burners are located in the main chamber 112. This differs from the embodiment of FIGURE 8 where both the electromagnetic induction means and the burner are located in the same chamber.

The sidewell chamber 113 has a sidewell inner side wall 158, a sidewell outer side wall 160, end wall 142 which is common with the main chamber, and liftable sidewell chamber door 162.

The main chamber 112 and the sidewell chamber 113 are in fluid communication by means of a first passageway 170 and a second passageway 172 through respective inner side walls 144,158 thereof.

It can be seen from FIGURES 10 and 11 that molten metal M substantially covers the main and sidewell chamber floors 118, 148 and is maintained in the liquid state by the burners 116. The molten metal in the chambers has a height F between the floors 118,148 and the surface of the molten metal.

The first passageway 170 connects the front region 156 of the main chamber to the front region 126 of the sidewell chamber, and that the second passageway 172 connects the rear region 128 of the sidewell chamber to the rear region 154 of the main chamber.
The sidewell chamber is shielded from the heat produced by burners 116 in the main chamber by inner side walls 144,158.

In other embodiments, the sidewell chamber may be arranged relative to the main chamber such that the inner side walls are not required to shield the side chamber from the main chamber, for example, the first 170 and second 172 passageways could be greater in length so as to increase the distance between the two chambers, thereby reducing the effect in the sidewell chamber of the heat produced by the burners in the main chamber.

It should be noted that the induced flow in the molten metal creates predictable surface patterns on the molten metal surface, and therefore the extraction means can be positioned accordingly in the sidewell chamber so as to facilitate the efficient removal of solid or gaseous impurities.

As in the embodiment of FIGURE 8, supplying a current to the electromagnetic induction means results in induced flow in the molten metal M.

However, the molten metal flow differs from that of the embodiment of FIGURE 8 due to the two chamber arrangement linked by passageways. The electromagnetic induction means induces flow in the molten metal which, with reference to FIGURE 10, creates a molten metal flow indicated by arrows E.

The molten metal in the main chamber 112 will flow into the sidewell chamber 113 via the first passageway 170 under the influence of the electromagnetic induction means 114 positioned in the sidewell chamber 113. The effect of drawing molten metal from the main chamber to the sidewell chamber via the first passageway will result in the molten metal in the sidewell chamber being drawn back into the main chamber via the second passageway, thus creating a continuous flow of molten metal between the two chambers.

The molten metal produced by melting the light and heavy scrap in the sidewell chamber will be drawn towards the second passageway 172 due to the molten metal flow set up by the electromagnetic induction means, and will enter the main chamber 112.

It can be seen from FIGURE 11 that the second passageway roof surface 177 is below the height F of the molten metal M, and any impurities which are on the surface of the molten metal will not be drawn into the main chamber, with only clean metal being able to pass through the second passageway.

It is important that the height F of the molten metal is controlled to prevent large quantities of impurities from entering the main chamber 112 from the sidewell chamber 113. The height can be controlled by introducing more metal into either chamber.

A combination of impurities removal and controlling the height F of the molten metal reduces the potential for impurities to flow into the main chamber.

Advantageously, by inclining the electromagnetic induction means, the resultant molten metal flow is not limited to flow in the horizontal direction, and leads to a greater dispersal of heat throughout the molten metal, and hence a more efficient melting process.

Preferably, the chamber includes a front region located adjacent the electromagnetic induction means, and light scrap metal is introduced into the front region.

Advantageously the introduction of light scrap in the vicinity of the electromagnetic means causes the light scrap metal to be pulled downwards and submerged under the influence of the molten metal flow created by the electromagnetic induction means. This creates more efficient heat dispersal which reduces melt and process times, and also reduces exposure of the scrap metal to an oxidising atmosphere and therefore minimises metal loss by oxidation.

Preferably the single chamber includes a rear region with an inclined floor, and heavy scrap metal is introduced into the rear region.

Advantageously this means that heavy scrap metal can be partly submerged in the rear region, therefore allowing the molten metal flow to wash through the heavy scrap. The molten metal in contact with the heavy scrap increases the heavy scrap temperature, and any impurities trapped inside the heavy scrap, for example, water, will evaporate as the temperature of the heavy scrap increases. This reduces the possibility of exposing water trapped inside the heavy scrap to confined and direct contact with the molten metal, because the rapid vaporisation as water comes into contact with the molten metal is clearly hazardous.

A potential limitation of furnaces with single chambers is having both the heat source and the resultant impurities from the scrap metal present in the same chamber, with the presence of impurities reducing the efficiency of the melt process.

Another limitation of single chamber furnaces is introducing the scrap metal in the same chamber as the heat source, thereby leading to metal loss through oxidation.

This can be partly overcome by employing the solutions as already defined, however, if the heat source and metal introduction are in the same chamber, the melting process will have a limited efficiency level.

Advantageously having two chambers enables the heat source to be isolated from the area in which scrap metal is introduced.

Furthermore, impurities produced from the scrap metal can be more efficiently extracted since the heat source is in a separate chamber, and hence the atmosphere is cooler.

## Claims

1. Flow inducement or stirring apparatus (500) adapted for use in recycling or refining scrap materials comprising or including electromagnetic induction apparatus (501) adapted for inducing downward and/or upward flow of molten metal material (M) and/or circulation of molten metal material (M) in a vertical plane and in which the electromagnetic induction apparatus (501) is arranged, in use, at an angle inclined to the horizontal in order to create an upward and/or downward inclined driving force on the molten metal (M) to drag any materials introduced on top of the molten metal downwardly to be submerged and said flow inducement or stirring apparatus (500) being adapted, in use, to simultaneously create a horizontal flow of molten metal material out of the vertical plane and/or circulation of molten metal in a horizontal plane.

2. Apparatus (500) as claimed in claim 1 in which the electromagnetic induction apparatus (500) is arranged, in use, at an angle inclined to the horizontal of 30° to 60°+/- 5° in order to create said upward and/or downward driving force on the molten metal (M).

3. Apparatus (500) as claimed in claim 2 in which the electromagnetic induction apparatus (501) is arranged, in use, at an angle inclined to the horizontal of about 45°.

4. Apparatus (500) as claimed in any one of the preceding claims in which the electromagnetic induction apparatus (501) is positioned on an inclined chamber or port wall (502) of a furnace (601), in use, containing molten metal (M).

5. Apparatus (500) as claimed in any one of the preceding claims in which the electromagnetic induction apparatus (501) is positionable at angle on a vertical chamber/furnace wall (600) by means of an attachment cradle or port (503) of the flow inducement or stirring apparatus (500).

6. Apparatus (500) as claimed in claim 5 in which the cradle or port includes an aperture (507) which, in use, leads to molten metal material (M) and allows materials to be introduced into the molten metal material (M).

7. Apparatus (500) as claimed in claim 5 or claim 6 in which the power, frequency or speed of the electromagnetic apparatus (501) is selectively variable to suit different tasks to be undertaken by the flow inducement/stirring apparatus (500).

8. Apparatus (500) as claimed in claim 7 in which the frequency is pre-settable to various values up to 50Hz (+/- 10 Hz).

9. Apparatus (500) as claimed in any one of the preceding claims in which the electromagnetic apparatus (500) is bi-directional.

10. Apparatus (500) as claimed in claim 9 in which the electromagnetic apparatus (500) is adapted for utilisation in one direction to create circulation in a vertical plane in order to submerge and mix light scrap materials/additives into the melt (M), said electromagnetic means (501) being adapted for utilisation in its other directional mode to reverse the flow circulation and thus extract molten materials (M) from a chamber or furnace (601).

11. Apparatus (500) as claimed in any one of the preceding claims in which the electromagnetic induction means (501), in use, acts through a thin plate (506).

12. Flow inducement or stirring apparatus (500) comprising or including selectively bi-directional electromagnetic induction apparatus (501) adapted for inducing downward and/or upward flow of molten metal material (M) in a container(601) and/or circulation of molten metal material (M) in a vertical plane, for example in a furnace (601), and in which the electromagnetic induction apparatus (501) is arranged, in use, at an angle inclined to the horizontal in order to create an upward and/or downward inclined driving force on the molten metel (M) and said flow inducement or stirring apparatus (500) being adapted, in use, to simultaneously create a horizontal flow of molten metal material out of the vertical plane and/or circulation of molten metal in a horizontal plane, said electromagnetic induction apparatus (501) being utilisable in one direction to create circulation in a vertical plane and submerge any materials on top of the molten metal (M) and utilisable in a reverse direction to extract molten material from the container (601).

13. A furnace or chamber (601) for treating molten metal materials (M) in combination with at least one flow inducement or stirring apparatus (500) as claimed in any one of the preceding claims.

14. A method of recycling or refining scrap materials (M), said method comprising inducing an upward and/or downward flow of molten metal (M) and/or circulation of molten metal (M) in a vertical plane, by electromagnetic induction apparatus (501) and comprising inducing a horizontal flow of molten metal material and/or circulation of molten metal in a horizontal plane and including introducing scrap materials into the molten metal (M) and dragging the scrap material downwardly to be submerged by said upward and/or downward flow of molten metal (M) and/or by circulation of molten metal (M) in a vertical plane.

15. A method as claimed in claim 14 including introducing scrap materials through an aperture (507) in a port or cradle (503) of the flow inducement or stirring means (500).

16. A method as claimed in claim 14 or 15 including operating the electromagnetic induction means (501) bi-directionally to suit different tasks.

17. A method as claimed in any one of claims 14 to 16 including operating the electromagnetic induction means up to 50 (+/- 10HZ).

## Patentansprüche

1. Strömungserzeugungs- oder Rührvorrichtung (500) angepasst zur Nutzung beim Recycling oder Veredeln von Abfallmaterialien, umfassend oder enthaltend eine elektromagnetische Induktionsvorrichtung (501) angepasst zur Erzeugung einer abwärts- und/oder aufwärtsgerichteten Strömung von geschmolzenem metallischen Material (M) und/oder einer Zirkulation von geschmolzenem metallischen Material (M) in einer vertikalen Ebene, und wobei die elektromagnetische Induktionsvorrichtung (501) bei Benutzung unter einem gegen die Horizontale geneigten Winkel angeordnet ist, um eine abwärts- und/oder aufwärtsgeneigte Antriebskraft auf das geschmolzene Metall (M) zu erzeugen, um alle Materialien, die von oben auf das geschmolzene Metall eingeführt werden, herunterzuziehen, damit sie untergemischt werden und wobei die Strömungserzeugungs- oder Rührvorrichtung (500) unter Benutzung dafür angepasst ist, eine horizontale Strömung geschmolzenem metallischen Materials aus der vertikalen Ebene und/oder einen Kreislauf geschmolzenem Metalls in der horizontalen Ebene simultan zu erzeugen.

2. Vorrichtung (500) nach Anspruch 1, wobei die elektromagnetische Induktionsvorrichtung (500) unter Benutzung unter einem um 30° bis 60° +/- 5° gegen die Horizontale geneigten Winkel angeordnet ist, um die aufwärts- und/oder abwärtsgerichtete Antriebskraft auf das geschmolzene Metall (M) zu erzeugen.

3. Vorrichtung (500) nach Anspruch 2, wobei die elektromagnetische Induktionsvorrichtung (501) unter Benutzung unter einem um ungefähr 40° gegen die Horizontale geneigten Winkel angeordnet ist.

4. Vorrichtung (500) nach einem der vorangehenden Ansprüche, wobei die elektromagnetische Induktionsvorrichtung (501) unter Benutzung an einer geneigten Kammer oder Anschlusswand (502) eines Ofens (601) positioniert ist, der das geschmolzene Metall (M) enthält.

5. Vorrichtung (500) nach einem der vorangehenden Ansprüche, wobei die elektromagnetische Induktionsvorrichtung (501) unter einem Winkel an einer vertikalen Kammer/Ofenwand (600) durch Mittel einer Aufhängung oder eines Anschlusses (503) der Strömungserzeugungs- oder Rührvorrichtung (500) positionierbar ist.

6. Vorrichtung (500) nach Anspruch 5, wobei die Aufhängung oder der Anschluss eine Öffnung (507) beinhalten, welcher unter Benutzung das geschmolzene metallische Material (M) leitet und es erlaubt, Materialien in das geschmolzene metallische Material (M) einzuführen.

7. Vorrichtung (500) nach Anspruch 5 oder 6, wobei die Kraft, Frequenz oder Geschwindigkeit der elektromagnetischen Vorrichtung (501) wahlweise wählbar ist, um verschiedene Aufgaben, die durch die Strömungserzeugungs-/Rührvorrichtung (500) wahrgenommen werden sollen, anzupassen.

8. Vorrichtung (500) nach Anspruch 7, wobei die Frequenz zu verschiedenen Werten bis_hin zu 50 Hz (+/- 10 Hz) vorwählbar ist.

9. Vorrichtung (500) nach einem der vorangehenden Ansprüche, wobei die elektromagnetische Vorrichtung (500) bidirektional ist.

10. Vorrichtung (500) nach Anspruch 9, wobei die elektromagnetische Vorrichtung (500) für die Benutzung in einer Richtung angepasst ist, um eine Zirkulation in einer vertikalen Ebene zu erzeugen, um leichte Abfallmaterialien/Additive in die Schmelze (M) unterzumischen und zu mixen, und die elektromagnetischen Mittel (501) zur Benutzung in ihrem anderen Richtungsmodus dafür angepasst sind, den Strömungskreislauf umzukehren und dadurch die geschmolzenen Materialien (M) aus einer Kammer oder Ofen (601) zu extrahieren.

11. Vorrichtung (500) nach einem der vorangehenden Ansprüche, wobei die elektromagnetischen Induktionsmittel (501) unter Benutzung durch eine dünne Platte hindurch wirken (506).

12. Strömungserzeugungs- oder Rührvorrichtung (500) umfassend oder einschließend eine wahlweise bidirektional elektromagnetische Induktionsvorrichtung (501), angepasst zur Erzeugung von abwärts- und/oder aufwärtsgerichteter Strömung von geschmolzenem metallischen Material (M) in einem Behälter (601) und/oder von einem Kreislauf von geschmolzenem metallischen Material (M) in einer vertikalen Ebene, bspw. in einem Ofen (601), und wobei die elektromagnetische Induktionsvorrichtung (501) unter Benutzung unter einem gegenüber der Horizontalen geneigten Winkel angeordnet ist, um eine aufwärts- und/oder abwärtsgeneigte Antriebskraft auf das geschmolzene Metall (M) zu erzeugen und die Strömungserzeugungs- und Rührvorrichtung (500) unter Benutzung dazu angepasst, simultan eine horizontale Strömung von geschmolzenem metallischen Material aus der vertikalen Ebene und/oder einen Kreislauf aus geschmolzenem Metall in einer horizontalen Ebene zu erzeugen, und die elektromagnetische Induktionsvorrichtung (501) dazu benutzbar ist, in einer Richtung einen Kreislauf in einer vertikalen Ebene zu erzeugen und jedes Material von oben auf dem geschmolzenem Metall (M) unterzumischen und dazu benutzbar ist, in einer umgekehrten Richtung geschmolzenes Material aus dem Behälter (601) zu entnehmen.

13. Ein Ofen oder eine Kammer (601) zur Behandlung von geschmolzenem metallischen Material (M) in Verbindung mit mindestens einer Strömungserzeugungs- oder Rührvorrichtung (500) nach einem der vorangehenden Ansprüche.

14. Verfahren zum Recyceln oder Veredeln von Abfallmaterialien (M), wobei das Verfahren die Erzeugung eines aufwärts- und/oder abwärtsgerichteten Stromes von geschmolzenem Metall (M) und/oder eines Kreislaufs von geschmolzenem Metall (M) in einer vertikalen Ebene durch eine elektromagnetische Induktionsvorrichtung (501) umfasst und eine Erzeugung von horizontaler Strömung von geschmolzenem metallischen Material und/oder eines Kreislaufs von geschmolzenem Metall in einer horizontalen Ebene umfasst, und die Einbringung von Abfallmaterialien in das geschmolzene Metall (M) einschließt, wobei das Abfallmaterial abwärts gezogen wird, um durch den aufwärts- und/oder abwärtsgerichteten Strom von geschmolzenem Metall (M) und/oder durch einen Kreislauf von geschmolzenem Metall (M) in einer vertikalen Ebene untergemischt zu werden.

15. Verfahren nach Anspruch 14, einschließlich dem Einführen von Abfallmaterialien durch eine Ausnehmung (507) in einem Anschluss oder einer Aufhängung (503) der Strömungserzeugungs- oder Rührmittel (500).

16. Verfahren nach Anspruch 14 oder 15, einschließlich der bidirektionalen Betätigung der elektromagnetischen Induktionsmittel (501), um sich für verschiedene Aufgaben zu eignen.

17. Verfahren nach einem der Ansprüche 14 bis 16, einschließlich dem Betrieb der elektromagnetischen Induktionsmittel bis_hin zu 50 Hz (+/- 10 Hz).

## Revendications

1. Dispositif de génération de flux ou de brassage (500) adapté à une utilisation pour le recyclage ou le raffinage de matières mises au rebut, constitué de, ou comprenant, un dispositif d'induction électromagnétique (501) adapté pour générer un flux ascendant et/ou descendant de matière métallique fondue (M) et/ou faire circuler une matière métallique fondue (M) sur un plan vertical, et dans lequel le dispositif d'induction électromagnétique (501) est disposé, en fonctionnement, selon un angle d'inclinaison par rapport à l'horizontale afin de créer une force d'entraînement sur un plan incliné, ascendante et/ou descendante, sur le métal fondu (M) pour entraîner vers le bas, afin d'être submergées, toutes matières introduites sur le dessus du métal fondu, et ledit dispositif de génération de flux ou de brassage (500) étant adapté, en fonctionnement, pour créer simultanément un flux horizontal de matière métallique fondue hors du plan vertical et/ou faire circuler le métal fondu sur un plan horizontal.

2. Dispositif (500) revendiqué dans la revendication 1, dans lequel le dispositif d'induction électromagnétique (500) est disposé, en fonctionnement, selon un angle d'inclinaison par rapport à l'horizontale de 30° à 60°+/-5°, afin de créer ladite force d'entraînement, ascendante et/ou descendante, sur le métal fondu (M).

3. Dispositif (500) revendiqué dans la revendication 2, dans lequel le dispositif d'induction électromagnétique (501) est disposé, en fonctionnement, selon un angle d'inclinaison par rapport à l'horizontale d'environ 45°.

4. Dispositif (500) revendiqué dans l'une quelconque des revendications précédentes, dans lequel le dispositif d'induction électromagnétique (501) est placé sur la chambre inclinée ou la paroi de l'orifice (502) d'un four (601), en fonctionnement, contenant du métal fondu (M).

5. Dispositif (500) revendiqué dans l'une quelconque des revendications précédentes, dans lequel le dispositif d'induction électromagnétique (501) est positionnable selon un angle sur une chambre/paroi de four verticale (600) au moyen d'un berceau ou orifice de fixation (503) du dispositif de génération ou brassage de flux (500).

6. Dispositif (500) revendiqué dans la revendication 5, dans lequel le berceau ou l'orifice comprend une ouverture (507) qui, en fonctionnement, conduit à la matière métallique fondue (M) et permet l'introduction de matières dans la matière métallique fondue (M).

7. Dispositif (500) revendiqué dans la revendication 5 ou la revendication 6, dans lequel la puissance, la fréquence ou la vitesse du dispositif électromagnétique (501) sont modifiables sélectivement pour les adapter aux différentes tâches devant être effectuées par le dispositif de génération de flux/brassage (500).

8. Dispositif (500) revendiqué dans la revendication 7, dans lequel la fréquence est pré-réglable sur diverses valeurs jusqu'à 50Hz (+/-10 Hz).

9. Dispositif (500) revendiqué dans l'une quelconque des revendications précédentes, dans lequel le dispositif électromagnétique (500) est bidirectionnel.

10. Dispositif (500) revendiqué dans la revendication 9, dans lequel le dispositif électromagnétique (500) est adapté à une utilisation dans une direction pour créer une circulation sur un plan vertical afin de submerger et de mélanger des matières mises au rebut ou des additifs légers dans la matière fondue (M), ledit moyen électromagnétique (501) étant adapté pour une utilisation dans son autre mode directionnel pour inverser la circulation du flux et extraire ainsi les matières fondues (M) d'une chambre ou d'un four (601).

11. Dispositif (500) revendiqué dans l'une quelconque des revendications précédentes, dans lequel le moyen d'induction électromagnétique (501), en fonctionnement, opère à travers une plaque fine (506).

12. Dispositif de génération de flux ou de brassage (500) constitué de, ou comprenant, un dispositif d'induction électromagnétique sélectivement bidirectionnel (501) adapté pour générer un flux de matière métallique fondue (M) ascendant et/ou descendant dans un récipient (601) et/ou faire circuler cette matière métallique fondue (M) sur un plan vertical, par exemple dans un four (601), et dans lequel le dispositif d'induction électromagnétique (501) est disposé, en fonctionnement, selon un angle d'inclinaison par rapport à l'horizontale afin de créer une force d'entraînement sur un plan incliné, ascendante et/ou descendante, sur le métal fondu (M), et ledit dispositif de génération de flux ou de brassage (500) est adapté, en fonctionnement, pour créer un flux horizontal de matière métallique fondue hors du plan vertical et/ou faire circuler simultanément le métal fondu sur un plan horizontal, ledit dispositif d'induction électromagnétique (501) étant utilisable dans une direction pour créer une circulation sur un plan vertical et submerger toutes matières sur le dessus du métal fondu (M), et utilisable dans une direction inverse pour extraire la matière fondue du récipient (601).

13. Four ou chambre (601) destiné au traitement de matières métalliques fondues (M) en combinaison avec au moins un dispositif de génération de flux ou de brassage (500) revendiqué dans l'une quelconque des revendications précédentes.

14. Procédé de recyclage ou de raffinage de matières mises au rebut (M), ledit procédé consistant à générer un flux ascendant et/ou descendant de métal fondu (M) et/ou à faire circuler le métal fondu (M) sur un plan vertical, au moyen d'un dispositif d'induction électromagnétique (501), et consistant à générer un flux horizontal de matière métallique fondue et/ou à faire circuler le métal fondu sur un plan horizontal, et comprenant l'introduction de matières mises au matière au rebut dans le métal fondu (M) et l'entraînement de ces matières mises au matière vers le bas afin d'être submergées par ledit flux ascendant et/ou descendant de métal fondu (M) et/ou la circulation du métal fondu (M) sur un plan vertical.

15. Procédé revendiqué dans la revendication 14, comprenant l'introduction de matières mises au rebut par une ouverture (507) dans un orifice ou un berceau (503) du moyen de génération de flux ou de brassage (500).

16. Procédé revendiqué dans la revendication 14 ou 15, comprenant l'actionnement du moyen d'induction électromagnétique (501) en mode bidirectionnel pour l'adapter à différentes tâches.

17. Procédé revendiqué dans l'une quelconque des revendications 14 à 16, comprenant l'actionnement du moyen d'induction électromagnétique jusqu'à 50 Hz (+/10 Hz).
